# EUROPÄISCHE PATENTSCHRIFT

(11) **EP 3 509 908 B1**
(45) Veröffentlichungstag und Bekanntmachung des Hinweises auf die Patenterteilung: **25.11.2020**
(21) Anmeldenummer: 17778163.0
(22) Anmeldetag: 08.09.2017
(51) Int. Cl.: B60P 7/08, B60P 3/075, B66C 1/18

(54) **AUFLAGE FÜR EIN ZURR- ODER ANSCHLAGMITTEL**
REST FOR A LASHING OR FASTENING MEANS
ÉLÉMENT DE RECOUVREMENT POUR UN MOYEN D'ARRIMAGE OU D'ARRÊT

(30) Priorität: 08.09.2016 AT 507932016
(43) Veröffentlichungstag der Anmeldung: 17.07.2019
(73) Patentinhaber: Kässbohrer Transport Technik GmbH, 5301 Eugendorf (AT)
(72) Erfinder: MEIXNER, Stefan, 5071 Wals (AT)
(74) Vertreter: Torggler & Hofinger Patentanwälte
(86) Internationale Anmeldenummer: PCT/AT2017/060216
(87) Internationale Veröffentlichungsnummer: WO 2018/045406

(56) Entgegenhaltungen:
- EP-A2- 1 867 523
- EP-B1- 1 791 777
- DE-A1- 10 252 397
- DE-A1- 10 252 398
- DE-U1-202007 003 887

## Beschreibung

Die Erfindung betrifft eine Auflage für ein Zurr- oder Anschlagmittel mit den Merkmalen des Oberbegriffs des Anspruchs 1, einen Körper mit wenigstens zwei Auflagen und ein Zurr- oder Anschlagmittel mit einer solchen Auflage oder einem solchen Körper.

Eine gattungsgemäße Auflage geht aus der EP 1 791 777 B1 hervor. Dort ist der zweite Anlagebereich in Form eines mit einem Grundgewebe verwebten, textilen Materials ausgebildet. Ziel einer solchen Auflage ist eine minimierte Reibung und dementsprechend ein erleichtertes Gleiten des Zurr- oder Anschlagmittels an dem zweiten Anlagebereich der Auflage, um im Belastungsfall eine gleichmäßigere Belastung an unterschiedlichen Abschnitten des Zurr- oder Anschlagmittels zu erreichen, weil sich so die sogenannte Seilreibung reduziert.

Weiterhin bekannt ist Dokument DE 20 2007 003887 U1, welches den nächstliegenden Stand der Technik darstellt und den Oberbegriff des Anspruchs 1 offenbart.

Versuche der Anmelderin haben ergeben, dass sich bei der gattungsgemäßen Auflage eine nur sehr unzureichende Verteilung der Belastung ergibt.

Aufgabe der Erfindung ist die Bereitstellung einer gattungsgemäßen Auflage für ein Zurr- oder Anschlagmittel, bei welcher sich eine verbesserte Verteilung der Belastung ergibt und eines Zurr- oder Anschlagmittels mit einer solchen Auflage.

Diese Aufgabe wird durch eine Auflage für ein Zurr- oder Anschlagmittel mit den Merkmalen des Anspruchs 1, einen Körpers mit wenigstens zwei Auflagen und ein Zurr- oder Anschlagmittel mit einer solchen Auflage oder einem solchen Körper gelöst. Vorteilhafte Ausführungsformen der Erfindung sind in den abhängigen Ansprüchen definiert.

Bei der Erfindung kommt ein (flächiges, nichttextiles) Blatt, eine (flächige, nichttextile) Folie oder ein (flächiges) beschichtetes Band (textil oder nichttextil) zum Einsatz.

Versuche der Anmelderin haben ergeben, dass bei einer erfindungsgemäßen Auflage von 100 % einer an einer Seite des Zurr- oder Anschlagmittels aufgebrachten Kraft an einer hinter dem Ladegut angeordneten Seite ca. 60 % gemessen wurden, was deutlich besser ist als die Ergebnisse bei handelsüblichen Auflagen. Dadurch kann ein sonst erforderliches Nachzurren des Zurr- oder Anschlagmittels reduziert werden oder bestenfalls entfallen.

Ohne sich auf diese Erklärung festlegen zu wollen, führt die Anmelderin den Vorteil der Erfindung darauf zurück, dass sich durch einen zweiten Anlagebereich in Form eines Blattes, einer Folie oder eines beschichteten Bandes eine homogenere oder größere Fläche mit verbesserter Gleiteigenschaft ergibt, als bei einem mit einem Grundgewebe verwebten textilen Material.

Bei Ausübung einer Zugkraft auf das Zurr- oder Anschlagmittel kommt es bei einem mit einem Grundgewebe verwebten textilen Material zu einem Raffen (Stauchen) der Textilfasern. Dieser Effekt tritt bei einem Blatt, einer Folie oder einem beschichteten Band nicht auf, insbesondere wenn diese formstabil verschiebbar (also stauchfrei oder stauchsicher) ausgebildet sind. Hierdurch wird die Gleitfähigkeit auch bei größerer Belastung gewährleistet.

Beim Einsatz eines beschichteten Bandes kann ein Beschichten durch Drucken, Aufsprühen, Imprägnieren, usw. erfolgen. Eine Beschichtung kann auch ein Folieren, also beispielsweise das Verschweißen des Bandes mit einer Folie, umfassen.

Dabei kann vorgesehen sein, dass - bei Ausbildung des zweiten Anlagebereichs als ein beschichtetes Band - die Beschichtung oder die Folie des beschichteten Bandes den zweiten Anlagebereich ausbildet, also die Beschichtung oder die Folie des Bandes zum Zurr- oder Anschlagmittel hin ausgerichtet ist.

Es kann vorteilhaft sein, dass der erste und der zweite Anlagebereich in Form eines Blattes, einer Folie oder eines beschichteten Bandes ausgebildet sind. Dadurch kann eine beidseitige Verwendbarkeit der Auflage ermöglicht werden.

Es ist vorgesehen, dass der zweite Anlagebereich der Auflage im Vergleich zum ersten Anlagebereich eine verbesserte Gleiteigenschaft aufweist. Dabei kann die Gleiteigenschaft des zweiten Anlagebereichs für einen Gurt eines Zurrmittels besser sein als die Gleiteigenschaft des ersten Anlagebereichs oder eines Gurts für ein Ladegut.

Es kann weiter vorteilhaft sein, wenn die Auflage in Form einer Hülle ausgebildet ist, wobei die Hülle schlauchförmig oder laschenförmig ausgebildet ist. Die Hülle kann so einen Gurt des Zurrmittels zumindest abschnittsweise umhüllen oder zumindest abschnittsweise umgreifen. Die freien Enden der laschenförmigen Hülle können auch miteinander verbunden sein. Die Hülle kann lösbar an einem Gurt eines Zurrmittels befestigbar ausgebildet sein. Eine Auflage in Form einer Hülle kann beispielsweise einen sogenannten Gurtcontroller ausbilden. Es kann bei der Ausbildung der Auflage als Hülle allgemein vorgesehen sein, dass diese beidseitig zum Gurt eine zweite Anlagefläche aufweist, wodurch sich eine beidseitige Verwendbarkeit der Auflage ergeben kann.

Dabei kann vorteilhaft sein, wenn das Blatt, die Folie oder das beschichtete Band als wenigstens ein Einlegeteil in der Hülle angeordnet ist und vorzugsweise mit dieser verbunden ist. Die Hülle kann dabei beispielsweise aus einem Schlauchband und zumindest einem darin eingelegten das Blatt, zumindest einer darin eingelegten Folie oder zumindest einem eingelegten, beschichteten Band bestehen. Eine von einem innenbeschichteten Schlauchband ausgebildete Hülle soll nicht ausgeschlossen sein.

Erfindungsgemäß ist vorgesehen, dass der zweite Anlagebereich zur Längenverstellung in Form von einzelnen, teilweise überlappenden und relativ zueinander verstellbaren Segmenten, ausgebildet ist. Dabei können teilweise überlappende Segmente von Blättern, Folien oder beschichteten Bändern verwendet werden. So kann sich eine längenverstellbare Auflage ergeben. Eine Längenverstellung der Auflage kann beim Verzurren eine Anpassung an die Größe des Ladeguts erlauben. Der zweite Anlagebereich kann an die Größe des Ladeguts angepasst werden, wodurch auch ein Kontakt des Gurtes des Zurrmittels mit dem Ladegut vermieden werden kann.

Es kann dabei vorteilhaft sein, wenn die einzelnen Segmente des zweiten Anlagebereichs an unterschiedlichen, teilweise überlappenden Abschnitten einer Hülle angeordnet sind. So kann sich eine längenverstellbare Hülle, beispielsweise mit ineinander verschachtelt angeordneten Abschnitten, ergeben.

Es kann vorteilhaft sein, dass das Blatt, die Folie oder die Beschichtung des beschichteten Bandes vollflächig ausgebildet ist, wobei ggf. eine Lochung vorgesehen sein kann.

Auch wird Schutz begehrt für einen Körper mit wenigstens zwei miteinander verbundenen, wie zuvor beschriebenen Auflagen. Ein solcher Körper kann im Wesentlichen die Funktion einer wie zuvor beschriebenen Hülle erfüllen.

Weiter wird Schutz begehrt für ein Zurr- oder Anschlagmittel, insbesondere einen Zurrgurt, mit wenigstens einer wie zuvor beschriebenen Auflage oder mit wenigstens einem wie zuvor beschriebenen Körper. Das Zurr- oder Anschlagmittel kann dabei einen Gurt, wenigstens eine Auflage, beispielsweise eine am Gurt anordenbare bzw. angeordnete Hülle, oder wenigstens einen an diesem anordenbaren bzw. angeordneten Körper, Anschlagmittel zur Festlegung bzw. Umlenkung des Gurtes, sowie eine Spannvorrichtung für den Gurt umfassen.

Schutz wird auch begehrt für die Verwendung einer wie zuvor beschriebenen Auflage, eines wie zuvor beschriebenen Körpers oder eines wie zuvor beschriebenen Zurr- oder Anschlagmittels für die Sicherung von Ladegut auf einem Fahrzeug gemäß den Merkmalen des Anspruchs 11 beziehungsweise des Anspruchs 12.

Ausführungsbeispiele der Erfindung werden anhand der Figuren diskutiert. Es zeigen:
- Fig. 1a bis 1c: eine perspektivische Ansicht und eine Seitenansicht eines Zurrmittels mit einer ersten, nicht beanspruchten Ausführung einer Auflage sowie verschiedene Ausbildungen der ersten Ausführung der Auflage,
- Fig. 2a bis 2c: eine perspektivische Ansicht, eine Draufsicht und eine Seitenansicht eines Zurrmittels mit einer zweiten Ausführung einer Auflage,
- Fig. 3a und 3b: verschiedene Ausbildungen der zweiten Ausführung der Auflage,
- Fig. 4a bis 4e: Schnittdarstellungen verschiedener Ausbildungen einer dritten Ausführung der Auflage,
- Fig. 5: eine Seitenansicht eines Zurrmittels mit einer vierten Ausführung einer Auflage,
- Fig. 6a und 6b: eine Seitenansicht und eine perspektivische Ansicht eines Zurrmittels mit einer fünften Ausführung einer Auflage,
- Fig. 7a und 7b: eine perspektivische Ansicht und eine Seitenansicht einer alternativen Ausbildung eines Zurrmittels der Fig. 6a und 6b,
- Fig. 8: einen aus Auflagen gebildeten Körper und
- Fig. 9: verschiedene Ausbildungen eines Blattes, einer Folie und einer Beschichtung.

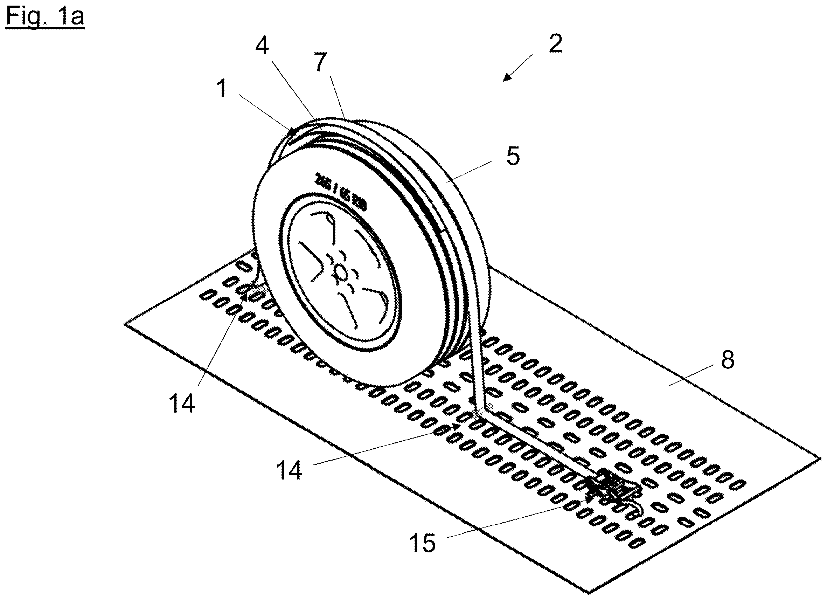

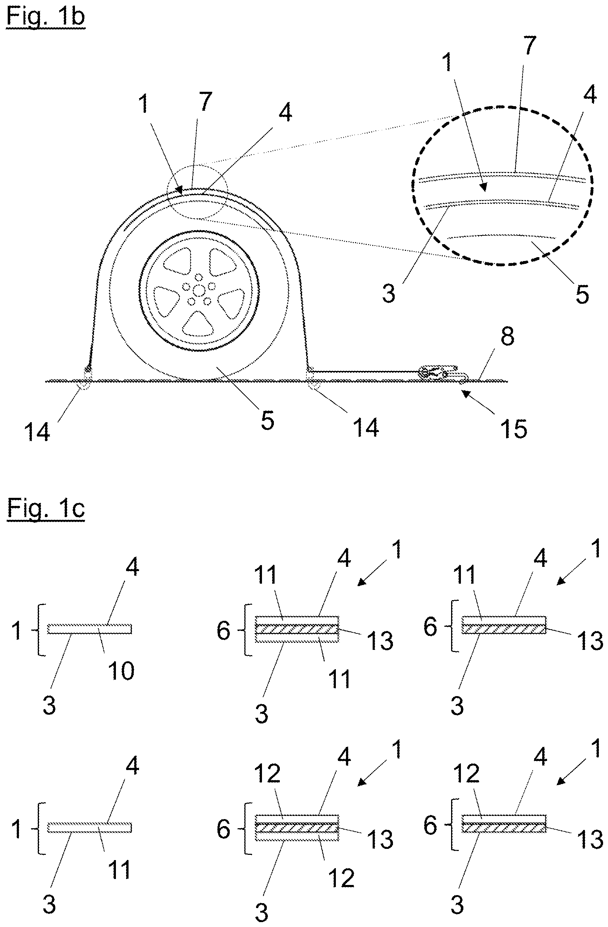

Fig. 1a zeigt eine perspektivische Ansicht eines Zurrmittels 2, mit welchem ein Ladegut 5 in Form eines Reifens auf einer Ladefläche 8 verzurrt ist. Das Zurrmittel ist aus Darstellungsgründen in den Figuren jeweils beabstandet vom Ladegut gezeichnet. Das Zurr- oder Anschlagmittel 2 umfasst einen Gurt 7, eine zwischen dem Gurt 7 und dem Ladegut 5 angeordnete Auflage 1, Anschlagmittel 14 zur Festlegung bzw. Umlenkung des Gurtes 7, sowie eine Spannvorrichtung 15 für den Gurt. Die Auflage 1 kann in der ersten Ausführung einfach als Blatt 10, als Folie 11 oder als beschichtetes Band 13 ausgebildet sein (siehe Fig. 1c).

Durch den zweiten, dem Gurt 7 zugewandten zweite Anlagebereich 4 der Auflage 1 kann allgemein eine nicht-raffende (formstabil verschiebbar), für den Gurt 7 gute Gleiteigenschaften aufweisende Oberfläche bereitgestellt werden. So kann bei einem Verzurren, also beispielsweise einem Spannen des Gurtes 7 mittels der Spannvorrichtung 15, über die im Wesentlichen gesamte Länge des Gurtes 7 eine Zugkraft auf den Gurt 7 ausgeübt werden. Der Gurt 7 kann beim Spannen über den zweiten Anlagebereich 4 der Auflage 1 gleiten und im gezeigten Ausführungsbeispiel eine in Richtung der Ladefläche 8 gerichtete Kraft auf das Ladegut 5 ausüben. Der erste Anlagebereich 3 der Auflage 1 liegt am Ladegut 5 an.

Fig. 1b zeigt eine Seitenansicht der Fig. 1a, wobei zusätzlich eine Detailansicht des Kontaktbereichs des Gurts 7, der Auflage 1 und des Ladeguts 5 gezeigt ist. Dabei ist der dem Ladegut 5 zugewandte erste Anlagebereich 3 und der dem Gurt 7 zugewandte zweite Anlagebereich 4 der Auflage 1 erkennbar.

In Fig. 1c sind verschiedene Ausbildungen der ersten Ausführung der Auflage 1 gezeigt. Diese umfassen die einfache Ausbildung der Auflage 1 als ein Blatt 10 oder als Folie 11 sowie die Ausbildung der Auflage 1 als ein Gefüge 6 durch ein ein- oder beidseitig mit einer Beschichtung 12 oder einer Folie 11 beschichtetes (bzw. foliertes) Band 13. Der erste und der zweite Anlagebereich 3, 4 sind dabei in Form von zwei Seiten des Gefüges 6 ausgebildet. Gemäß der Figur 1c kann bei einer Ausbildung der Anlage 1 als ein beschichtetes Band 13 vorgesehen sein, dass der zweiten Anlagebereich 4 von der Beschichtung 11 oder der Folie 12 des beschichteten Bandes 13 ausgebildet ist. Allgemein sind Ausführungen der Auflage 1 mit einer abweichenden, beispielsweise reibungserhöhenden, Oberfläche oder auch Beschichtung des dem Ladegut 5 zugewandten ersten Anlagebereichs 3 denkbar.

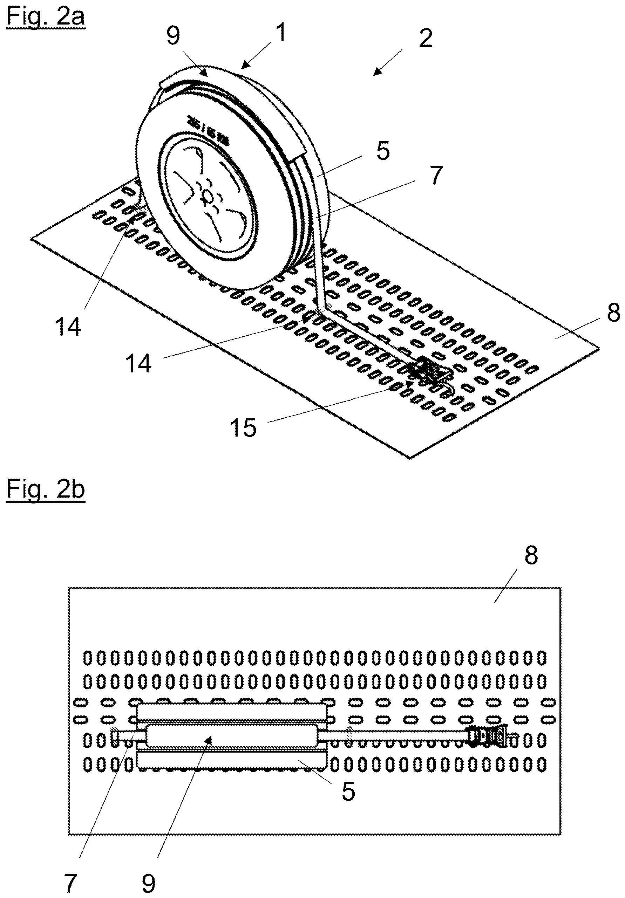

Fig. 2a und 2b zeigen eine perspektivische Ansicht und eine Draufsicht eines Zurrmittels 2 mit einer zweiten Ausführung einer Auflage 1, wobei die Auflage 1 als eine Hülle 9 ausgebildet ist.

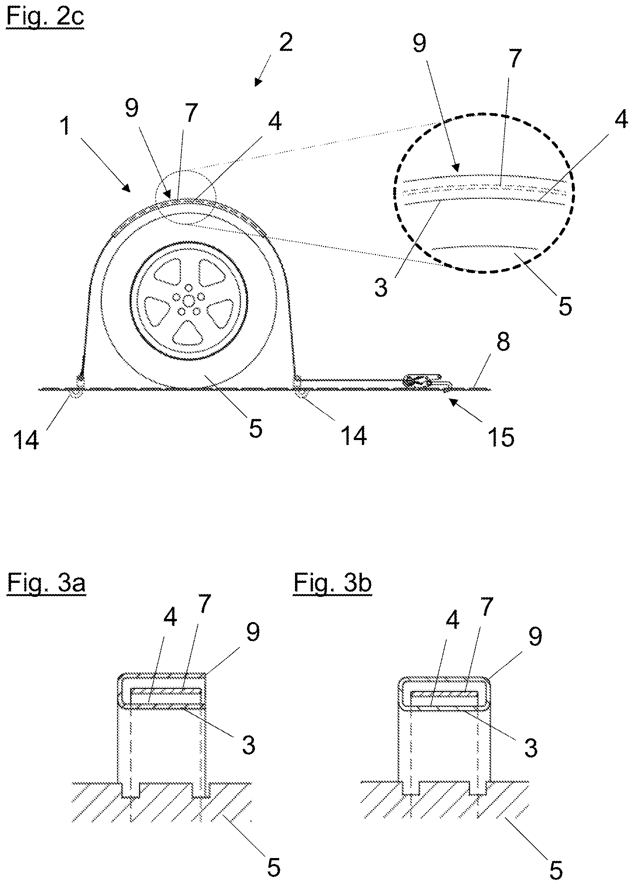

Fig. 2c zeigt eine Seitenansicht des Zurrmittels 2 mit der zweiten Ausführung der Auflage 1, wobei zusätzlich eine Detailansicht des Kontaktbereichs des Gurts 7, der Auflage 1 und des Ladeguts 5 gezeigt ist. Die Auflage 1 kann den Gurt 7 abschnittsweise umhüllen bzw. umgreifen. Diese Ausbildungen sind in den Schnittdarstellungen der Fig. 3a und 3b gezeigt. Die Auflage 1 in Form der Hülle 9 kann in der zweiten Ausführung zur Gänze als Blatt 10, Folie 11 oder als beschichtetes Band 13 ausgebildet sein.

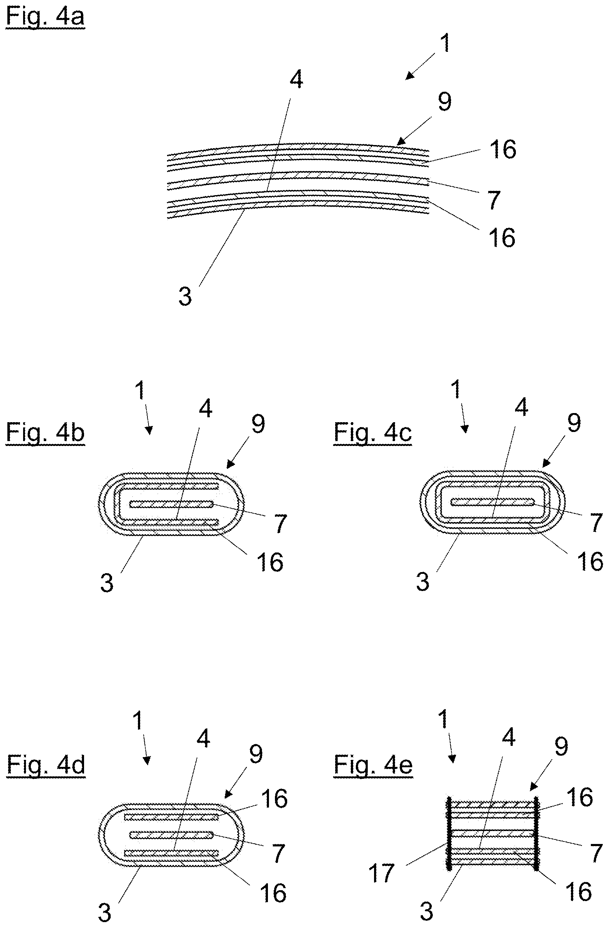

Fig. 4a zeigt eine Schnittdarstellung einer dritten Ausführung der Auflage 1, wobei der Schnitt entlang der Längserstreckung des Gurts 7 bzw. der Auflage 1 erfolgt. Die Auflage 1 ist wieder als Hülle 9 ausgebildet, dabei ist jedoch das Blatt 10, die Folie 11 oder das beschichtete Band 13 als ein Einlegeteil 16 in der Hülle 9 angeordnet. Der zweite Anlagebereich 4 ist somit in dieser Ausführung von der dem Gurt 7 zugewandten Seite des Einlegeteils 16 ausgebildet und der erste Anlagebereich ist von der dem Ladegut 5 zugewandten Seite der Hülle 9 ausgebildet.

Die Fig. 4b bis 4e zeigen verschiedene Schnittdarstellungen verschiedener Ausbildungen dieser dritten Ausführung der Auflage 1, wobei der Schnitt quer zur Längserstreckung des Gurts 7 bzw. der Auflage 1 erfolgt. Das Blatt 10, die Folie 11 oder das beschichtete Band 13 ist jeweils als ein Einlegeteil 16 in der Hülle 9 (beispielsweise Schlauchband) angeordnet, wobei das Einlegeteil 16 den Gurt 7 umgreifen oder umhüllen kann. Es können wie in Fig. 4d dargestellt auch zwei Einlegeteile 16 vorgesehen sein. Fig. 4e zeigt eine mehrteilige Ausbildung der Hülle 9, bei welcher zwei Hüllenteile (beispielsweise Bandmaterial) und zwei Einlegeteile 16 durch eine Verbindung 17 miteinander verbunden sind.

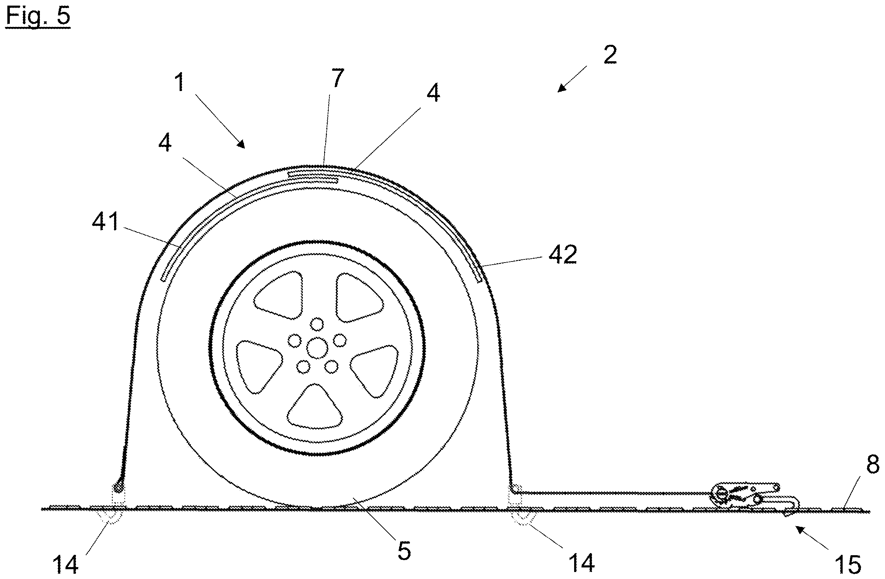

Fig. 5 zeigt eine Seitenansicht eines Zurrmittels 2 mit einer vierten Ausführung einer Auflage 1, wobei der zweite Anlagebereich 4 zur Längenverstellbarkeit der Auflage 1 in Form von einzelnen, teilweise überlappenden und relativ zueinander verstellbaren Segmenten 41, 42 des Blatts 10, der Folie 11 oder des beschichteten Bands 13 ausgebildet ist. Eine Längenverstellung der Auflage 1 kann beim Verzurren eine Anpassung des zweiten Anlagebereichs 4 an die Größe des Ladeguts 5 erlauben. Wie dargestellt, kann so auch ein Kontakt des Gurtes 7 mit dem Ladegut 5 gänzlich vermieden werden.

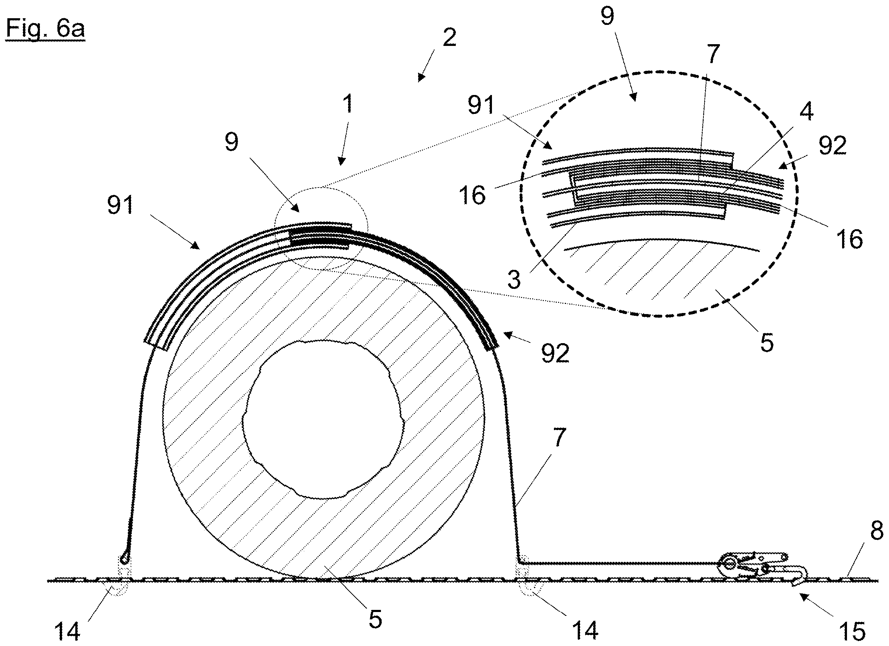

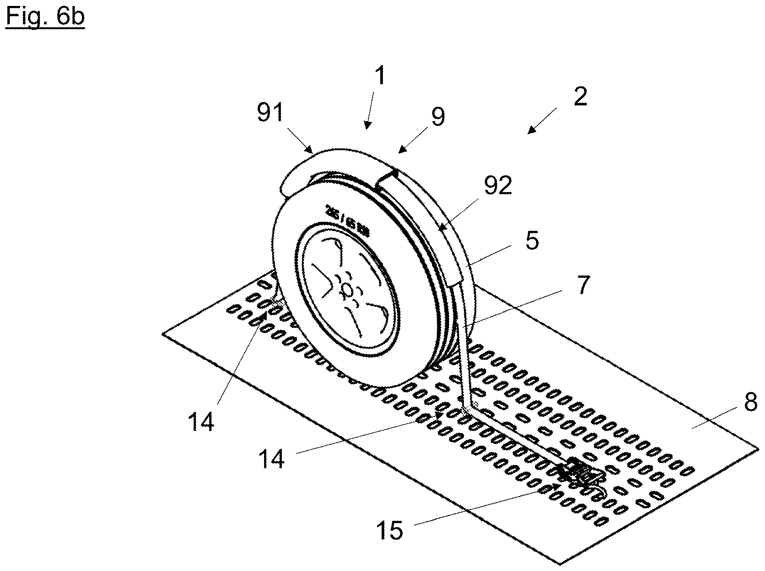

Fig. 6a zeigt eine Seitenansicht eines Zurrmittels 2 mit einer fünften Ausführung einer Auflage 1, wobei zusätzlich eine Detailansicht des Kontaktbereichs des Gurts 7, der als Hülle 9 ausgebildeten Auflage 1 und des Ladeguts 5 gezeigt ist. Es ist erkennbar, dass die einzelnen Segmente 41, 42 des zweiten Anlagebereichs 4 der Auflage 1 an unterschiedlichen, teilweise überlappenden Abschnitten 91, 92 der Hülle 9 angeordnet sind. Die Abschnitte 91, 92 der Hülle 9 sind ineinander verschachtelt angeordnet und relativ zueinander verstellbar (teleskopierbar). Fig. 6b zeigt eine perspektivische Ansicht der Fig. 6a.

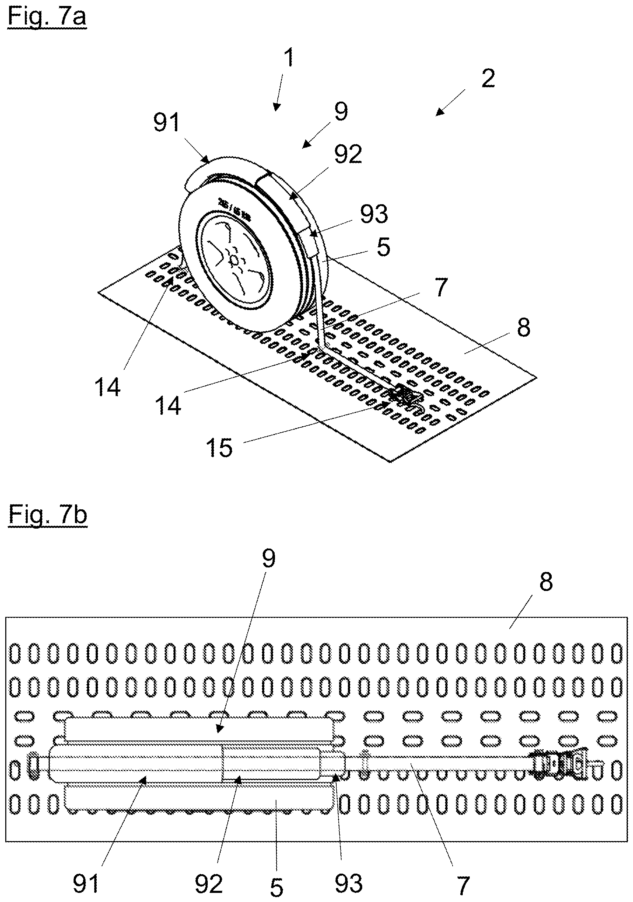

Fig. 7a und 7b zeigen eine perspektivische Ansicht und eine Seitenansicht einer alternativen Ausbildung eines Zurrmittels 2. Die Hülle 9 weist in dieser Variante drei teilweise überlappende Abschnitte 91, 92, 93 auf. Dies kann bei besonders großen Abmessungen des Ladeguts 5 vorteilhaft sein.

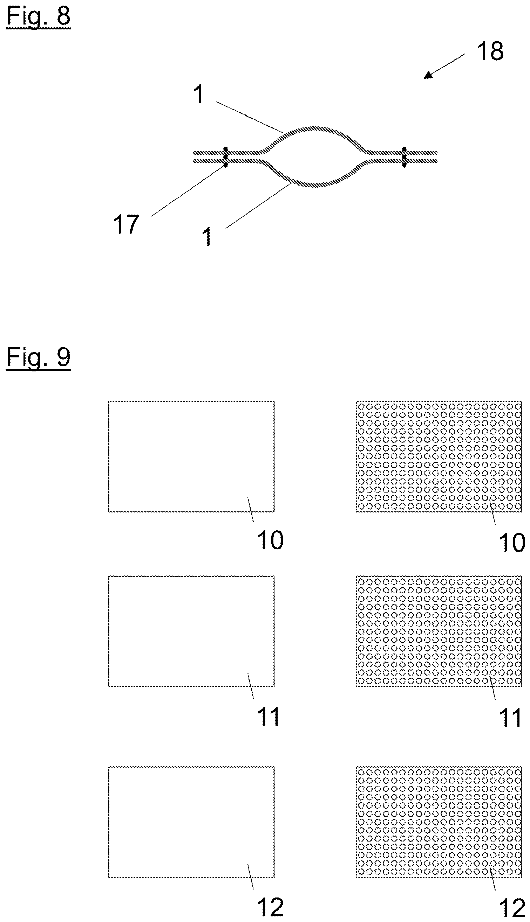

Fig. 8 zeigt einen aus zwei miteinander durch eine Verbindung 17 verbundenen Auflagen 1 gebildeten Körper 18. Die Auflagen 1 können als Blatt 10, Folie 11 oder als beschichtetes Band 13 ausgebildet sein. Ein solcher Körper 18 kann ebenso für ein Zurrmittel 2 verwendet werden.

Fig. 9 zeigt letztlich verschiedene Ausbildungen eines Blattes 10, einer Folie 11 und einer Beschichtung 12. Wie gezeigt können das Blatt 10, die Folie 11 oder die Beschichtung 12 des beschichteten Bandes 13 vollflächig ausgebildet sein oder eine Lochung aufweisen.

### Bezugszeichenliste:

- 1: Auflage
- 2: Zurr- oder Anschlagmittel
- 3: erster Anlagebereich
- 4: zweiter Anlagebereich
41 Segment des zweiten Anlagebereichs
42 Segment des zweiten Anlagebereichs
- 5: Ladegut
- 6: Gefüge
- 7: Gurt
- 8: Ladefläche
- 9: Hülle
91 Hüllensegment
92 Hüllensegment
93 Hüllensegment
- 10: Blatt
- 11: Folie
- 12: Beschichtung
- 13: Band
- 14: Anschlagpunkt
- 15: Spannvorrichtung
- 16: Einlegeteil
- 17: Verbindung
- 18: Körper

## Patentansprüche

1. Auflage (1) für ein Zurr- oder Anschlagmittel (2), mit einem ersten Anlagebereich (3) zur Anlage an einem Ladegut (5) und einem zweiten Anlagebereich (4) zur Anlage am Zurr- oder Anschlagmittel (2), wobei der zweite Anlagebereich (4) in Form eines Blattes (10), einer Folie (11) oder eines beschichteten Bandes (13) ausgebildet ist und der zweite Anlagebereich (4) im Vergleich zum ersten Anlagebereich (3) eine verbesserte Gleiteigenschaft aufweist, **dadurch gekennzeichnet, dass** der zweite Anlagebereich (4) zur Längenverstellung in Form von einzelnen, teilweise überlappenden und relativ zueinander verstellbaren Segmenten (41, 42) ausgebildet ist.

2. Auflage nach dem vorangehenden Anspruch, wobei eine Beschichtung (12) oder die Folie (11) des beschichteten Bandes (13) den zweiten Anlagebereich (4) ausbildet.

3. Auflage nach wenigstens einem der vorangehenden Ansprüche, wobei das Blatt (10), die Folie (11) oder das beschichtete Band (13) formstabil verschiebbar ausgebildet ist.

4. Auflage nach wenigstens einem der vorangehenden Ansprüche, wobei der erste und der zweite Anlagebereich (3, 4) in Form eines Blattes (10), einer Folie (11) oder eines beschichteten Bandes (13) ausgebildet sind.

5. Auflage nach wenigstens einem der vorangehenden Ansprüche, wobei die Auflage (1) in Form einer Hülle (9) ausgebildet ist, wobei die Hülle (9) schlauchförmig oder laschenförmig ausgebildet ist.

6. Auflage nach dem vorangehenden Anspruch, wobei das Blatt (10), die Folie (11) oder das beschichtete Band (13) als wenigstens ein Einlegeteil (16) in der Hülle (9) angeordnet ist und vorzugsweise mit dieser verbunden ist.

7. Auflage nach wenigstens einem der vorangehenden Ansprüche, wobei die einzelnen Segmente (41, 42) des zweiten Anlagebereichs (4) an unterschiedlichen, teilweise überlappenden Abschnitten (91, 92) einer Hülle (9) angeordnet sind.

8. Auflage nach wenigstens einem der vorangehenden Ansprüche, wobei das Blatt (10), die Folie (11) oder die Beschichtung (12) des beschichteten Bandes (13) vollflächig ausgebildet ist, wobei ggf. eine Lochung vorgesehen sein kann.

9. Körper (18) mit wenigstens zwei miteinander verbundenen Auflagen (1) nach wenigstens einem der vorangehenden Ansprüche.

10. Zurr- oder Anschlagmittel (2), insbesondere Zurrgurt, mit einer Auflage (1) nach einem der Ansprüche 1 bis 8 oder einem Körper (18) nach Anspruch 9.

11. Verwendung einer Auflage (1) nach einem der Ansprüche 1 bis 8, eines Körpers (18) nach Anspruch 9 oder eines Zurr- oder Anschlagmittels (2) nach Anspruch 10 für die Sicherung von Ladegut (5) auf einem Fahrzeug, insbesondere von Fahrzeugen auf einem Fahrzeugtransporter.

12. Verwendung eines Zurr- oder Anschlagmittels (2) nach Anspruch 10 für die Sicherung von Ladegut (5) auf einem Fahrzeug, wobei ein Kontakt eines Gurtes (7) des Zurr- oder Anschlagmittels (2) mit dem Ladegut (5) durch eine Anpassung der Länge des zweiten Anlagebereichs (4) an die Größe des Ladeguts (5) vermieden wird.

## Claims

1. A support (1) for a lashing or securing means (2) comprising a first contact region (3) for contact with a load and a second contact region (4) for contact with the lashing or securing means (2), wherein the second contact region (4) is in the form of a sheet (10), a film (11) or a coated band (13) and the second contact region (4) has an improved sliding property in comparison with the first contact region (3), **characterised in that** the second contact region (4) for length adjustment is in the form of individual, partially overlapping segments (41, 42) adjustable relative to each other.

2. A support according to the preceding claim wherein a coating (12) or the film (11) of the coated band (13) forms the second contact region (4).

3. A support according to at least one of the preceding claims wherein the sheet (10), the film (11) or the coated band (13) is adapted to be displaceable in dimensionally stable form.

4. A support according to at least one of the preceding claims wherein the first and the second contact regions (3, 4) are in the form of a sheet (10), a film (11) or a coated band (13).

5. A support according to at least one of the preceding claims wherein the support (1) is in the form of a sleeve (9), the sleeve (9) being of a tubular or strap-shaped configuration.

6. A support according to the preceding claim wherein the sheet (10), the film (11) or the coated band (13) is arranged in the form of at least one insert portion (16) in the sleeve (9) and is preferably connected thereto.

7. A support according to at least one of the preceding claims wherein the individual segments (41, 42) of the second contact region (4) are arranged at different, partially overlapping portions (91, 92) of a sleeve (9).

8. A support according to at least one of the preceding claims wherein the sheet (10), the film (11) or the coating (12) of the coated band (13) is of an entire surface configuration, wherein optionally a perforation means can be provided.

9. A body (18) comprising at least two mutually connected supports (1) according to at least one of the preceding claims.

10. A lashing or securing means (2), in particular a lashing strap, comprising a support (1) according to one of claims 1 to 8 or a body (18) according to claim 9.

11. Use of a support (1) according to one of claims 1 to 8, a body (18) according to claim 9 or a lashing or securing means (2) according to claim 10 for securing a load (5) on a vehicle, in particular vehicles on a vehicle transporter.

12. Use of a lashing or securing means (2) according to claim 10 for securing a load (5) on a vehicle, wherein contact of a strap (7) of the lashing or securing means (2) with the load (5) is avoided by adaptation of the length of the second contact region (4) to the size of the load (5).

## Revendications

1. Elément de recouvrement (1) pour un moyen d'arrimage ou d'arrêt (2), avec une première zone d'appui (3) destinée à venir en appui sur un chargement (5) et une deuxième zone d'appui (4) destinée à venir en appui sur le moyen d'arrimage ou d'arrêt (2), dans lequel la deuxième zone d'appui (4) est conçue en forme de feuille (10), de pellicule (11) ou de bande enduite (13) et la deuxième zone d'appui (4) présente une propriété de glissement améliorée en comparaison de la première zone d'appui (3), **caractérisé en ce que** la deuxième zone d'appui (4), pour le réglage en longueur, est conçue sous forme de différents segments (41, 42) se chevauchant partiellement et réglables les uns par rapport aux autres.

2. Elément de recouvrement selon la revendication précédente, dans lequel une enduction (12) ou la pellicule (11) de la bande enduite (13) constitue la deuxième zone d'appui (4).

3. Elément de recouvrement selon au moins l'une des revendications précédentes, dans lequel la feuille (10), la pellicule (11) ou la bande enduite (13) est conçue de façon déplaçable et indéformable.

4. Elément de recouvrement selon au moins l'une des revendications précédentes, dans lequel la première et la deuxième zone d'appui (3, 4) sont conçues en forme de feuille (10), de pellicule (11) ou de bande enduite (13).

5. Elément de recouvrement selon au moins l'une des revendications précédentes, dans lequel l'élément de recouvrement (1) est conçu en forme d'une gaine (9), dans lequel la gaine (9) est conçue tubulaire ou en forme de collier de fixation.

6. Elément de recouvrement selon la revendication précédente, dans lequel la feuille (10), la pellicule (11) ou la bande enduite (13) est disposée comme au moins une pièce insérée (16) dans la gaine (9) et est reliée de préférence à celle-ci.

7. Elément de recouvrement selon au moins l'une des revendications précédentes, dans lequel les différents segments (41, 42) de la deuxième zone d'appui (4) sont disposés sur différentes sections (91, 92), se chevauchant partiellement, d'une gaine (9).

8. Elément de recouvrement selon au moins l'une des revendications précédentes, dans lequel la feuille (10), la pellicule (11) ou l'enduction (12) de la bande enduite (13) est conçue sur toute la surface, dans lequel une perforation peut être prévue, le cas échéant.

9. Corps (18) avec au moins deux éléments de recouvrement (1) reliés ensemble selon au moins l'une des revendications précédentes.

10. Moyen d'arrimage ou d'arrêt (2), plus particulièrement sangle d'arrimage, avec un élément de recouvrement (1) selon l'une des revendications 1 à 8 ou un corps (18) selon la revendication 9.

11. Utilisation d'un élément de recouvrement (1) selon l'une des revendications 1 à 8, d'un corps (18) selon la revendication 9 ou d'un moyen d'arrimage ou d'arrêt (2) selon la revendication 10 pour la consolidation d'un chargement (5) sur un véhicule, plus particulièrement de véhicules sur un transporteur de véhicules.

12. Utilisation d'un moyen d'arrimage ou d'arrêt (2) selon la revendication 10 pour la consolidation d'un chargement (5) sur un véhicule, dans laquelle un contact d'une sangle (7) du moyen d'arrimage ou d'arrêt (2) avec le chargement (5) est évité en adaptant la longueur de la deuxième zone d'appui (4) à la dimension du chargement (5).
